# FASCICULE DE BREVET EUROPEEN

(11) **EP 0 688 741 B1**
(45) Date de publication et mention de la délivrance du brevet: **22.12.1999**
(21) Numéro de dépôt: 95401479.1
(22) Date de dépôt: 22.06.1995
(51) Int. Cl.: C03C 3/087

(54) **Composition de verre clair destinée à la fabrication de vitrages**
Klare Glaszusammensetzung für die Herstellung von Verglasungen
Clear glass composition for the manufacture of glazing

(30) Priorité: 23.06.1994 FR 9407725
(43) Date de publication de la demande: 27.12.1995
(73) Titulaire: SAINT-GOBAIN VITRAGE, 92400 Courbevoie (FR)
(72) Inventeur: Combes, Jean-Marie, F-75018 Paris (FR); Sachot, Dominique, F-94340 Joinville le Pont (FR)
(74) Mandataire: Breton, Jean-Claude

(56) Documents cités:
- EP-A- 0 413 254
- GB-A- 1 168 769
- US-A- 5 030 593
- US-A- 5 030 594
- CHEMICAL ABSTRACTS, vol. 114, no. 8, 25 Février 1991, Columbus, Ohio, US; abstract no. 67754, GOR'KAYA ET AL. 'sodium silicate glass' page 361 ; & SU-A-1 565 815 (CHERNYATINSK GLASS PLANT) 23 Mai 1990
- CHEMICAL ABSTRACTS, vol. 119, no. 12, 20 Septembre 1993, Columbus, Ohio, US; abstract no. 123406v, ARTAMONOVA ET AL. 'glass' page 421 ; & SU-A-1 744 067 (GNII STEKLA ; CHERNYATINSKIJ STEKOLNYJ ZAVOD) 29 Juin 1992
- CHEMICAL ABSTRACTS, vol. 111, no. 4, 24 Juillet 1989, Columbus, Ohio, US; abstract no. 27683x, FEDOROVA ET AL. 'smoked glass with low refining temperature' page 257 ; & SU-A-1 470 679 (STATE SCIENTIFIC-RESEARCH INSITUTE OF GLASS) 7 Avril 1989
- DATABASE WPI Week 8549, Derwent Publications Ltd., London, GB; AN 85-307908 & JP-A-60 215 546 (NIPPON SHEET GLASS KK) 28 Octobre 1985
- SPRECHSAAL, vol.126, no.5, Mai 1993, COBURG DE pages 292 - 297 J. STEVENSON 'minor additions of b2o3 to container glass formulations'

## Description

La présente invention concerne une composition de verre silico-sodo-calcique apte à la réalisation de vitrages susceptibles d'être utilisés dans dans le domaine architectural ou l'industrie automobile. La composition selon l'invention est particulièrement adaptée pour être mise sous la forme d'un ruban de verre selon la technique du verre flotté.

Les compositions de verre silico-sodo-calcique utilisées dans cette technique depuis de nombreuses années se caractérisent par des variations très faibles par rapport à un verre moyen dont la composition suivante, exprimée en pourcentages pondéraux, est bien représentative:

| | |
|---|---|
| SiO₂ | 73.08 |
| Al₂O₃ | 0,11 |
| CaO | 8,94 |
| MgO | 3,88 |
| Na₂O | 13,68 |
| K₂O | 0,02 |
| Fe₂O₃ | 0,12 |
| SO₃ | 0,23 |

Ce verre, qui se caractérise notamment par une faible teneur en oxydes de fer, permet de réaliser des feuilles de verre dont le facteur de transmission lumineuse globale sous illuminant A (TL_{A}) peut être particulièrement élevé. Cette caractéristique est recherchée lors de la fabrication de vitrages destinés à être montés sur des véhicules automobiles ou à être installés sur des bâtiments.

Le fer, traditionnellement exprimé par Fe₂O₃, est réparti dans le verre sous la forme d'oxydes ferrique et ferreux dont les concentrations respectives sont fonction du degré d'oxydo-réduction du verre ; la présence d'oxyde ferrique permet d'absorber les radiations ultraviolettes et celles qui possèdent de courtes longueurs d'ondes dans la partie visible du spectre ; la présence d'oxyde ferreux permet d'absorber les radiations du proche infrarouge et celles correspondant aux grandes longueurs d'onde du domaine visible. Ce dernier phénomène d'absorption a pour effet de réduire le facteur de transmission énergétique globale (T_{E}). Ces oxydes de fer, en particulier FeO, contribuent à la coloration du verre.

Un vitrage réalisé avec un verre du type mentionné ci-dessus présente, sous une forte épaisseur, une coloration non négligeable malgré la faible teneur en oxydes de fer.

La présente invention a pour objet une composition de verre silico-sodo-calcique qui permet de réaliser des vitrages présentant, à teneur en fer identique, notamment sous la forme FeO, et sous la même épaisseur, une coloration plus faible que celle des verres connus et une meilleure absorption des radiations infrarouges.

La présente invention a notamment pour objet une composition de verre présentant une coloration grise ou bronze et dont le facteur de transmission lumineuse sous illuminant A est élevé.

Ces buts sont atteints grâce à une composition de verre silico-sodo-calcique qui comprend les constituants ci-après, selon des teneurs, exprimées en pourcentages pondéraux, définies par les limites suivantes :

| | |
|---|---|
| SiO₂ | 69 à 75 % |
| Al₂O₃ | 0 à 3 % |
| B₂O₃ | 0 à 5 % |
| CaO | 2 à 10 % |
| MgO | < 2 % |
| Na₂O | 9 à 17 % |
| K₂O | 0 à 8 % |
| Se | 0 à 0,002 % |
| CoO | 0 à 0,001 % |
| Cr₂O₃ | 0 à 0,001 % |
| avec 0,02 % < Fe₂O₃ ₍ₜₒₜₐₗ₎ < 0,2 % | |

cette composition dénucés d'oxyde de strontium mais étant susceptible de contenir également jusqu'à 2% de fluor, jusqu'à 3% d'oxyde de zinc, jusqu'à 1,5% d'oxyde de zirconium et jusqu'à moins de 4 % d'oxyde de baryum, la somme des pourcentages des oxydes alcalino-terreux demeurant égale ou inférieure à 10 %.

La teneur et la nature de chacun des constituants entrant dans la composition des verres selon l'invention, commentées ci-après, permettent d'obtenir des verres qui, tout en présentant les propriétés requises pour fabriquer des vitrages à partir de feuilles découpées dans un ruban de verre flotté, se caractérisent par un déplacement du maximum de la bande d'absorption de FeO vers les grandes longueurs d'onde.

La silice est maintenue dans les limites relativement étroites pour les raisons suivantes : au-dessus d'environ 75 %, la viscosité du verre et son aptitude à la dévitrification augmentent fortement ce qui rend beaucoup plus difficile sa fusion et sa coulée sur un bain d'étain, au-dessous de 69 %, la résistance hydrolytique du verre décroît très rapidement et la transmission dans le visible diminue également.

Cette diminution de la résistance hydrolytique du verre peut être compensée, au moins en partie, par l'introduction de Al₂O₃, mais cette oxyde contribue à l'augmentation de sa viscosité et à une diminution de la transmission dans le visible ; il ne peut donc être utilisé qu'en quantité très limitée.

Les oxydes alcalins Na₂O et K₂O permettent de faciliter la fusion du verre et d'ajuster sa viscosité aux températures élevées afin de les maintenir proche de celle d'un verre standard. K₂O peut être utilisé jusqu'à environ 8 %. Au-delà de ce pourcentage, l'augmentation du coût de la composition devient un handicap économique. Par ailleurs, l'augmentation du pourcentage de K₂O ne peut se faire, pour l'essentiel, qu'au détriment de Na₂O ce qui peut contribuer à l'augmentation de la viscosité. Toutefois, dans des conditions déterminées, la présence de K₂O permet d'augmenter l'absorption du verre dans l'infrarouge. La somme des teneurs pondérales de Na₂O et K2O est, de préférence, supérieure à 15%.

Les oxydes alcalino-terreux jouent un rôle déterminant dans l'obtention des propriétés des verres de la présente invention.

Il a été en effet découvert que la limitation de la teneur en MgO à un pourcentage inférieur à 2 % et, de préférence, inférieur à 1%, voire même sa suppression dans les verres de l'invention, a notamment pour effet de déplacer la bande d'absorption due à FeO vers les grandes longueurs d'onde. La suppression totale de MgO, qui joue un rôle important sur la viscosité peut être compensée, au moins en partie, par l'augmentation de Na₂O. Ainsi lorsque la teneur en MgO est nulle, la somme des teneurs pondérales de Na2O et K2O est, de préférence, supérieure à 15% en poids.

CaO doit être limité à 10 % ; au-delà, l'aptitude du verre à la dévitrification augmente trop rapidement.

BaO, qui permet d'augmenter la transmission lumineuse, peut être ajouté dans les compositions selon l'invention dans des teneurs inférieures à 4%. En effet, BaO a une influence beaucoup plus faible que MgO et CaO sur la viscosité du verre. Dans le cadre de l'invention, l'augmentation de BaO se fait essentiellement au détriment des oxydes alcalins, de MgO et surtout de CaO. Toute augmentation importante de BaO contribue donc à augmenter la viscosité du verre, notamment aux basses températures. De surcroît, l'introduction d'un pourcentage élevé de BaO majore sensiblement le coût de la composition et a tendance à réduire la résistance hydrolytique du verre. Lorsque les verres de l'invention contiennent de l'oxyde de baryum, le pourcentage de cet oxyde est, de préférence, compris entre 0,5 et 3,5 % en poids.

Outre le respect des limites définies précédemment pour la variation de la teneur de chaque oxyde alcalino-terreux, il est impératif, pour obtenir les propriétés de transmission recherchées, de limiter la somme des pourcentages de MgO, CaO et BaO à une valeur égale ou inférieure à 10 %. A noter que pour des raisons essentiellement économiques les verres selon l'invention sont totalement dénués d'oxyde de strontium.

Les verres selon l'invention peuvent contenir également du fluor, de préférence entre 0,5 et 2 % en poids. Outre son action bien connue sur la fusion et la viscosité du verre, ce constituant a un effet spécifique sur l'absorption des radiations infrarouges, effet qui s'additionne à l'effet produit par la suppression de MgO et l'introduction de K₂O et BaO. Cet effet se traduit par un léger déplacement du maximum de la bande d'absorption de FeO dans l'infrarouge, mais surtout par un redressement de pente de ladite bande à l'extrémité du domaine du visible proche de l'infrarouge.

Les verres selon l'invention peuvent aussi contenir de l'oxyde de zinc. Cet oxyde permet de diminuer la viscosité du verre, si nécessaire, et contribue à augmenter la résistance hydrolytique du verre et à diminuer son aptitude à la dévitrification. C'est la raison pour laquelle ZnO est introduit de préférence dans les verres selon l'invention contenant un pourcentage élevé de silice et/ou ne contenant pas d'alumine. L'oxyde de zinc peut être aussi avantageusement ajouté dans le mélange vitrifiable qui sera utilisé pour élaborer un verre réduit. Cet oxyde permet d'éviter l'apparition d'une couleur ambre, due à la formation de sulfures de fer, qui peut se produire dans ce type de verre. Ainsi, l'oxyde de zinc peut être introduit dans les verres selon l'invention à raison d'au moins 0,05% lorsque le rapport FeO/Fe₂O₃(total) est égal ou supérieur à environ 0,4. Afin de ne pas majorer excessivement le coût de la composition, la teneur en ZnO n'excède pas environ 3 % en poids.

Les verres selon l'invention peuvent également contenir de l'oxyde de zirconium. Cet oxyde permet de stabiliser le verre et d'améliorer la résistance chimique du verre, en particulier sa résistance hydrolytique. Cet oxyde est introduit, de préférence, dans les verres selon l'invention contenant peu ou pas d'alumine dans des teneurs qui peuvent atteindre 1,5 % en poids.

Les verres selon l'invention peuvent également contenir jusqu'à 1 % d'autres constituants apportés par les impuretés des matières premières vitrifiables et/ou du fait de l'introduction de calcin dans le mélange vitrifiable et/ou provenant de l'utilisation d'agent d'affinage (SO₃, Cl, Sb₂O₃, As₂O₃).

Les verres selon l'invention présentant une coloration bronze comprennent généralement du sélénium et du cobalt. Ils se caractérisent par des longueurs d'onde dominante, sous illuminant C, supérieures à environ 565 nanomètres.

Les verres selon l'invention présentant une nuance grise comprennent généralement du sélénium ainsi que de l'oxyde cobalt et de l'oxyde de chrome. Ils se caractérisent par des longueurs d'onde dominante, sous illuminant C, inférieures à environ 560 nanomètres.

Les verres selon l'invention peuvent être élaborés dans des conditions qui permettent d'atteindre le degré d'oxydo-réduction désiré. Ainsi, les verres selon l'invention peuvent être élaborés en utilisant les agents d'affinage connus, tels que les sulfates, leur rédox étant inférieur à 0,35 et généralement compris entre 0,2 et 0,3. C'est le cas, notamment, des verres qui contiennent du sélénium.

Ils peuvent être aussi élaborés dans des conditions décrites, par exemple, par le brevet EP-B-297 404 et présenter un rédox supérieur à 0,4 ou 0,5 ; le rédox des verres selon l'invention reste toutefois inférieur à 0,8.

La teneur et la nature de chacun des constituants entrant dans la composition des verres selon l'invention, principalement les oxydes alcalino-terreux, permettent d'obtenir des verres dont l'absorption dans le proche infrarouge est modifiée grâce à un déplacement vers les grandes longueurs d'onde du maximum de la bande d'absorption de FeO dans ce domaine spectral. Ce déplacement s'accompagne souvent d'une augmentation de l'intensité de cette bande d'absorption et/ou de son élargissement. Ce déplacement a pour effet non seulement d'augmenter l'absorption dans l'infrarouge des verres selon l'invention, mais également d'atténuer la coloration provoquée par FeO. Ce phénomène permet ainsi d'élaborer des verres plus faiblement colorés sous une épaisseur déterminée que les verres habituels à taux de fer identiques, c'est-à-dire à qualité de matières premières vitrifiables comparables. Il permet, le cas échéant, d'élaborer des verres présentant la même coloration que les verres habituels sous une épaisseur déterminée mais avec une teneur en fer plus élevée, c'est-à-dire avec des matières premières vitrifiables moins pures. Grâce à ce phénomène une absorption non négligeable des radiations infrarouges et faible coloration du verre sont obtenues lorsque la teneur en fer total des verres selon l'invention, exprimée sous la forme Fe₂O₃, est supérieure à environ 0,04% en poids.

Les verres selon l'invention se caractérisent par un facteur de transmission lumineuse globale supérieur à 80 % sous une épaisseur de 3,85 millimètres et présentent un rapport TL_{A} / T_{E} égal ou supérieur à 1.

Les verres selon l'invention présentent une pureté d'excitation sous illuminant C (Pc) inférieure à 2 % sous une épaisseur de 3,85 millimètres. Pour les verres gris selon l'invention, cette pureté est inférieure à 1,5 % sous la même épaisseur et inférieure à 1 % sous une épaisseur de 3,15 millimètres.

Les avantages des verres selon l'invention seront mieux perçus à travers l'exemple comparatif décrit ci-après. Les deux compositions de verre ci-après sont exprimées en pourcentages pondéraux. Le verre 1 est représentatif des verres de type connu, notamment en ce qui concerne la teneur en MgO. Le verre 2 illustre l'invention. Les facteurs de transmission lumineuse globale sous illuminant A (TL_{A}) et de transmission énergétique globale (T_{E}), de même que la transmission dans l'infrarouge (T_{IR}), ont été mesurés selon la méthode PARRY MOON MASS 2, sous une épaisseur de 3,85 millimètres. Les deux verres présentent une teneur identique en FeO égale à 0,028 %).

| | **1** | **2** |
|---|---|---|
| SiO₂ | 71.10 | 73.50 |
| Al₂O₃ | 0,70 | 0.90 |
| CaO | 8,80 | 9.00 |
| MgO | 4,00 | - |
| Na₂O | 14,30 | 15.80 |
| K₂O | 0,22 | 0.29 |
| Fe₂O₃ | 0,10 | 0.10 |
| SO₃ | 0,30 | 0.30 |
| λ _{FeO}(nm) | 1020 | 1110 |
| σ _{FeO}(nm) | 180 | 450 |
| TL_{A} (%) | 89,20 | 89,90 |
| TL_{A} / T_{E} | 1,03 | 1,05 |
| T_{IR} | 81,80 | 80,50 |
| Pc (%) | 0,25 | 0,30 |
| λ_{D} (nm) | 518 | 541 |

Le déplacement d'environ 90 nanomètres de la longueur d'onde (λ _{FeO}) correspondant au maximum de la bande d'absorption due à FeO du verre illustrant l'invention par rapport au verre connu s'accompagne d'un élargissement considérable de ladite bande. L'importance de cet élargissement peut être apprécié par l'écart (σ _{FeO}) existant entre les deux longeurs d'onde correspondant aux valeurs de transmission supérieures de 0,5 % à la transmission minimum. Outre l'influence sur la coloration du verre, cette modification spectrale provoque une légère augmentation de l'absorption dans l'infrarouge des verres selon l'invention à teneur en FeO identique et malgré la faible teneur dudit oxyde.

Les verres selon l'invention sont compatibles avec les techniques habituelles de fabrication du verre plat. L'épaisseur du ruban de verre obtenu par nappage du verre en fusion sur un bain d'étain peut varier entre 0,8 et 10 millimètres. Le vitrage obtenu par la découpe du ruban de verre peut subir ultérieurement une opération de bombage, notamment lorsqu'il doit être monté sur un véhicule automobile.

A l'instar d'autres vitrages, les vitrages obtenus à partir des verres selon l'invention peuvent être soumis au préalable à des traitements superficiels ou être associés, par exemple, à un revêtement organique tel qu'un film à base de polyuréthanes à propriétés antilacérantes ou à un film assurant l'étanchéité en cas de bris ; il pêut être revêtu localement d'une couche telle qu'une couche d'émail.

Les vitrages selon l'invention peuvent être revêtus d'au moins une couche d'oxyde métallique obtenue par dépôt chimique à haute température selon les techniques de pyrolyse ou de dépôt chimique en phase vapeur (CDV) ou dépôt sous vide.

## Revendications

1. Composition de verre silico-sodo-calcique destinée notamment à la réalisation de vitrage, **caractérisée en ce qu'**elle comprend les constituants ci-après selon des teneurs, exprimées en pourcentages pondéraux, définies par les limites suivantes :
| | |
|---|---|
| SiO2 | 69 à 75% |
| Al₂O₃ | 0 à 3 % |
| B₂O₃ | 0 à 5 % |
| CaO | 2 à 10 % |
| MgO | < 2% |
| Na₂O | 9 à 17 % |
| K₂O | 0 à 8 % |
| Se | 0 à 0,002% |
| CoO | 0 à 0,001 % |
| Cr₂O₃ | 0 à 0,001 % |
| avec 0,02 % < Fe₂O₃ ₍ₜₒₜₐₗ₎ < 0,2 % | |
cette composition étant dénuée d'oxyde de strontium mais étant susceptible de contenir également jusqu'à 2 % de fluor, jusqu'à 3 % d'oxyde de zinc, jusqu'à 1,5 % d'oxyde de zirconium et jusqu'à moins de 4 % d'oxyde de baryum, la somme des pourcentages des oxydes alcalino-terreux demeurant égale ou inférieure à 10 %.

2. Composition de verre selon la revendication 1, **caractérisée en ce que** la teneur en MgO est inférieure à 1% et de préférence, est nulle.

3. Composition de verre selon l'une quelconque des revendications 1 et 2, **caractérisée en ce que** la somme des teneurs des oxydes alcalins est supérieure à environ 15%.

4. Composition de verre selon l'une quelconque des revendications précédentes, **caractérisée en ce qu'**elle comprend de 0,5 à 3,5 % en poids de BaO.

5. Composition de verre selon l'une quelconque des revendications précédentes, **caractérisée en ce qu'**elle comprend de 0,5 à 2 % en poids de fluor.

6. Composition de verre selon l'une quelconque des revendications précédentes, **caractérisée en ce qu'**elle comprend de 0,05 à 3 % en poids de ZnO.

7. Vitrage, **caractérisé en ce qu'**il comprend au moins une feuille de verre dont la composition chimique est définie par l'une quelconque des revendications précédentes, ladite feuille présentant une épaisseur comprise entre 0,8 et 10 millimètres.

8. Vitrage selon la revendication 7, **caractérisé en ce qu'**il comprend au moins une feuille de verre, ledit verre présentant, sous une épaisseur de 3,85 millimètres, un facteur TL_{A} au moins égal à 80 %.

## Claims

1. Soda-lime-silica glass composition more particularly intended for producing a glazing, characterized in that it comprises the following constituents in accordance with the contents, expressed in percentages by weight, defined by the following limits:
| | |
|---|---|
| SiO₂ | 60 to 75% |
| Al₂O₃ | 0 to 3% |
| B₂O₃ | 0 to 5% |
| CaO | 2 to 10% |
| MgO | < 2% |
| Na₂O | 9 to 17% |
| K₂O | 0 to 8% |
| Se | 0 to 0.002% |
| CoO | 0 to 0.001% |
| Cr₂O₃ | 0 to 0.001% |
| with 0.02% < Fe₂O₃ ₍ₜₒₜₐₗ₎ < 0.2% | |
said composition being free from strontium oxide, but being able to also contain up to 2% fluorine, up to 3% zinc oxide, up to 1.5% zirconium oxide and up to at least 4% barium oxide, the sum of the percentages of the alkaline earth oxides remaining equal to or below 10%.

2. Glass composition according to claim 1, characterized in that the MgO content is below 1% and is preferably zero.

3. Glass composition according to either of the claims 1 and 2, characterized in that the sum of the contents of the alkaline earth oxides is above approximately 15%.

4. Glass composition according to any one of the preceding claims, characterized in that it comprises 0.5 to 3.5 wt.% BaO.

5. Glass composition according to any one of the preceding claims, characterized in that it comprises 0.5 to 2 wt.% fluorine.

6. Glass composition according to any one of the preceding claims, characterized in that it comprises 0.05 to 3 wt. % ZnO.

7. Glazing, characterized in that it comprises at least one glass sheet, whose chemical composition is defined by any one of the preceding claims, said sheet having a thickness between 0.8 and 10 mm.

8. Glazing according to claim 7, characterized in that it comprises at least one glass sheet, said glass having, under a thickness of 3.85 mm, a factor TL_{A} of at least 80%.

## Patentansprüche

1. Kalk-Natron-Silicat-Glaszusammensetzung, welche insbesondere zur Herstellung einer Glasscheibe vorgesehen ist, **dadurch gekennzeichnet, daß** sie folgende Bestandteile mit in Gewichtsprozenten ausgedrückten Anteilen umfaßt, die durch nachstehende Grenzen definiert sind:
| | |
|---|---|
| SiO₂ | 69 bis75 %, |
| Al₂O₃ | 0 bis 3 %, |
| B₂O₃ | 0 bis 5 %, |
| CaO | 2 bis10 %, |
| MgO | < 2 %, |
| Na₂O | 9 bis17 %, |
| K₂O | 0 bis 8 %, |
| Se | 0 bis 0,002 %, |
| CoO | 0 bis 0,001 %, |
| Cr₂O₃ | 0 bis 0,001 %, |
| mit 0,02 % < Fe₂O_{3(gesamt)} < 0,2 %, | |
wobei die Zusammensetzung frei von Strontiumoxid, aber in der Lage ist, auch bis zu 2 % Fluor, bis zu 3 % Zinkoxid, bis zu 1,5 % Zirconiumoxid und bis zu weniger als 4 % Bariumoxid zu enthalten und die Prozentsumme der Erdalkalioxide gleich oder unter 10 % bleibt.

2. Glaszusammensetzung nach Anspruch 1, **dadurch gekennzeichnet, daß** der MgO-Gehalt weniger als 1 % beträgt und vorzugsweise gleich Null ist.

3. Glaszusammensetzung nach Anspruch 1 oder 2, **dadurch gekennzeichnet, daß** die Summe der Anteile an Alkalioxiden größer als etwa 15 % ist.

4. Glaszusammensetzung nach einem der vorhergehenden Ansprüche, **dadurch gekennzeichnet, daß** sie 0,5 bis 3,5 Gew.-% BaO enthält.

5. Glaszusammensetzung nach einem der vorhergehenden Ansprüche, **dadurch gekennzeichnet, daß** sie 0,5 bis 2 Gew.-% Fluor enthält.

6. Glaszusammensetzung nach einem der vorhergehenden Ansprüche, **dadurch gekennzeichnet, daß** sie 0,05 bis 3 Gew.-% ZnO enthält.

7. Verglasung, **dadurch gekennzeichnet, daß** sie mindestens eine Glasscheibe umfaßt, deren chemische Zusammensetzung durch einen der vorhergehenden Ansprüche definiert ist, wobei die Glasscheibe eine Dicke von 0,8 bis 10 Millimetern besitzt.

8. Verglasung nach Anspruch 7, **dadurch gekennzeichnet, daß** sie mindestens eine Glasscheibe umfaßt, wobei das Glas bei einer Dicke von 3,85 Millimetern einen Lichttransmissionsgrad T_{LA} von mindestens 80 % aufweist.
